(19) Europäisches Patentamt
European Patent Office
Office européen des brevets

(11) **EP 4 592 326 A1**

(12) **EUROPEAN PATENT APPLICATION**
published in accordance with Art. 153(4) EPC

(43) Date of publication:
**30.07.2025 Bulletin 2025/31**

(21) Application number: **23883053.3**

(22) Date of filing: **24.10.2023**

(51) International Patent Classification (IPC):
***C08F 236/10*** *(2006.01)* ***C08F 8/42*** *(2006.01)*

(52) Cooperative Patent Classification (CPC):
**C08F 8/42; C08F 236/10**

(86) International application number:
**PCT/KR2023/016548**

(87) International publication number:
**WO 2024/090947 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 KR 20220137475**

(71) Applicants:
- **LG CHEM, LTD.**
  **Seoul 07336 (KR)**
- **The Goodyear Tire & Rubber Company**
  **Akron, OH 44316 (US)**

(72) Inventors:
- **OH, Jung Hwan**
  **Daejeon 34122 (KR)**
- **CHOI, Jae Sun**
  **Daejeon 34122 (KR)**
- **BAEK, Keun Seung**
  **Daejeon 34122 (KR)**
- **KIM, Hye Young**
  **Daejeon 34122 (KR)**
- **ANYFANTAKI, Karmena Izabela**
  **7257 Helmsange (LU)**
- **WEYDERT, Marc**
  **8064 Bertrange (LU)**
- **JACOBY, Claude Charles**
  **6615 Wasserbillig (LU)**

(74) Representative: **Plasseraud IP**
**104 Rue de Richelieu**
**CS92104**
**75080 Paris Cedex 02 (FR)**

(54) **MODIFIED CONJUGATED DIENE-BASED COPOLYMER**

(57) The present invention relates to a modified conjugated diene-based copolymer which, when used in a rubber compound leads to excellent wet skid resistance and rolling resistance in balance, and provides a modified conjugated diene-based copolymer comprising a first polymer unit, a second copolymer unit and a functional group derived from a modifier, and satisfying conditions (i) to (vi) at the same time.

EP 4 592 326 A1

## Description

## TECHNICAL FIELD

Cross-reference to Related Applications

This application claims the benefit of Korean Patent Application No. 10-2022-0137475, filed on October 24, 2022, in the Korean Intellectual Property Office, the contents of which are incorporated herein by reference.

Technical Field

The present invention relates to a modified conjugated diene-based copolymer which has excellent wet skid resistance and rolling resistance in a balanced way, when the copolymer is used to a rubber compound.

## BACKGROUND ART

According to the recent demand for cars having a high fuel efficiency, a conjugated diene-based polymer having modulational stability represented by wet skid resistance as well as low rolling resistance, and excellent abrasion resistance and tensile properties is required as a rubber material for tires.

In order to reduce the rolling resistance of tires, there is a method of reducing hysteresis loss of vulcanized rubber. A rebound resilience at 50°C to 80°C, tan $\delta$, Goodrich heating, or the like is used as an evaluation index of the vulcanized rubber. That is, it is desirable to use a rubber material having high rebound resilience at the above temperature or a low tan $\delta$ value or Goodrich heating.

Natural rubbers, polyisoprene rubbers, or polybutadiene rubbers are known as rubber materials having low hysteresis loss, but these rubbers have a limitation of low wet skid resistance. Thus, recently, conjugated diene-based polymers or copolymers such as styrene-butadiene rubbers (hereinafter, referred to as "SBR") and butadiene rubbers (hereinafter, referred to as "BR"), are prepared by emulsion polymerization or solution polymerization to be used as rubbers for tires. Among these polymerization methods, the greatest advantage of the solution polymerization in comparison to the emulsion polymerization is that the vinyl structure content and the styrene content, which specify physical properties of the rubber, may be arbitrarily adjusted and its molecular weight and physical properties may be controlled by coupling or modification. Thus, the SBR prepared by the solution polymerization is widely used as a rubber material for tires because it is easy to change a structure of the finally prepared SBR or BR, and movement of chain terminals may be reduced and a coupling force with a filler such as silica and carbon black may be increased by coupling or modification of the chain terminals.

The solution-polymerized SBR is prepared by using an anionic polymerization initiator and is being used by coupling or modifying the chain terminals of the polymer thus formed using various modifiers. For example, U.S. Patent No. 4,397,994 discloses a method of coupling active anions of the chain terminals of a polymer obtained by polymerizing styrene-butadiene using alkyllithium which is a monofunctional initiator in a non-polar solvent, using a coupling agent such as a tin compound.

In addition, if the solution-polymerized SBR is used as a rubber material, physical properties required for tires such as rolling resistance may be controlled by increasing the vinyl content in the SBR, but if the vinyl content is high, braking performance and abrasion resistance tend to become unfavorable, and accordingly, the styrene content in the SBR is required to a certain level or more, but in this case, effects expressed by the high vinyl content may not be shown.

Accordingly, attempts for improving rolling resistance and wet skid resistance in a balanced way have been made using block copolymer SBR including two block copolymer units which have styrene and vinyl content gradients by using the solution-polymerized SBR, but the improvement was just insignificant.

[PRIOR ART DOCUMENTS]

[PATENT DOCUMENTS]

(Patent Document 1) JP Laid-open Patent No. Hei 8-193147 (1996. 07. 30.)
(Patent Document 2) US 4,397,994 A (1983. 08. 09.)

## DETAILED DESCRIPTION OF THE INVENTION

## TECHNICAL PROBLEM

The present invention has been devised to solve the above-mentioned problems of the related arts, and an object of the present invention is to provide a modified conjugated diene-based copolymer including a first polymer unit and a second copolymer unit, respectively including a repeating unit derived from a conjugated diene-based monomer, and a repeating unit derived from a conjugated diene-based monomer and a repeating unit derived from an aromatic vinyl-based monomer, and a functional group derived from a modifier, and satisfying specific conditions.

## TECHNICAL SOLUTION

To solve the above-described tasks, according to an embodiment of the present invention, the present invention provides a modified conjugated diene-based copolymer comprising a first polymer unit, a second copolymer unit and a functional group derived from a modifier, wherein the first polymer unit comprises a repeating unit derived from a conjugated diene-based monomer, the second copolymer unit comprises a repeating unit derived from a conjugated diene-based monomer and a repeating unit derived from an aromatic vinyl-based monomer, and the following conditions (i) to (vi) are satisfied:

(i) peaks of a differential curve of a differential scanning calorimetry curve measured by elevating a temperature from -100°C to 100°C at a rate of 10°C/min under a circulation of 50 ml/min of nitrogen, using differential scanning calorimetry based on ISO 22768:2006, are two;
(ii) a glass transition temperature of the first polymer unit is lower than a glass transition temperature of the second copolymer unit;
(iii) the glass transition temperature of the first polymer unit is from -100°C to -40°C;
(iv) the glass transition temperature of the second copolymer unit is from greater than -40°C to 10°C;
(v) the content of the second copolymer unit is from 5 wt% to 40 wt%; and
(vi) an interaction parameter ($\chi_{eff}N$) defined by the following Mathematical Formula 1 at room temperature is 15 or more:

[Mathematical Formula 1]

$$X_{eff}N = [(x_1 - x_2)(y_2 - y_1)(X_{VS} - X_{BS}) + (y_1 - y_2)^2 X_{VB}] \times N$$

in Mathematical Formula 1,

N is a polymerization degree of the modified conjugated diene-based copolymer,
$X_1$ is a styrene bond volume ratio in the first polymer
$X_2$ is a styrene bond volume ratio in the second copolymer
$y_1$ is a 1,2-vinyl bond volume ratio in butadiene in the first polymer,
$y_2$ is a 1,2-vinyl bond volume ratio in butadiene in the second copolymer,
$X_{VS}$ is 0.0565 + 5.62 $T^{-1}$, $X_{BS}$ is 0.00843 + 10.2 $T^{-1}$, and $X_{VB}$ is 0.00269 + 1.87 $T^{-1}$, where T is room temperature, and the unit thereof is an absolute temperature unit (K).

## ADVANTAGEOUS EFFECTS

The modified conjugated diene-based copolymer according to the present invention includes a first polymer unit, a second copolymer unit and a functional group derived from a modifier and satisfies specific conditions defined by (i) to (vi) at the same time, and thus, achieves improving effects of wet skid resistance and rolling resistance at the same time, when the copolymer is used to a rubber compound

## MODE FOR CARRYING OUT THE INVENTION

Hereinafter, the present invention will be described in more detail in order to assist the understanding of the present invention.
It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

**Definition**

In the present disclosure, the term "copolymer" refers to a polymer compound prepared by polymerizing two or more different types of monomers.

In the present disclosure, the term "1,2-vinyl bond content" refers to the mass(or weight) percent of butadiene contained at 1,2-positions in the polymer chain of the copolymer based on the portion derived from a conjugated diene-based monomer (butadiene, etc.) (the total amount of polymerized butadiene) in a copolymer.

In the present disclosure, the term "styrene bond content" refers to the mass (or weight) percent of styrene contained in the copolymer chain of the copolymer derived from an aromatic vinyl-based monomer (styrene, etc.) in a copolymer.

In the present disclosure, the term "interaction parameter ($X_{eff}N$)" is a value obtained by multiplying an effective interaction parameter or effective segmental interaction parameter which is the measure of interaction between constituent units of a copolymer by the polymerization degree of the copolymer, and is calculated by the following Mathematical Formula 1 which is a Flory-Huggins Interaction parameter calculation formula (see Marcromolecules 1991, 24, 4844-4851 and RSC Advances, 2016, 6, 50460-50470):

[Mathematical Formula 1]

$$X_{eff}N = [(x_1 - x_2)(y_2 - y_1)(X_{VS} - X_{BS}) + (y_1 - y_2)^2 X_{VB}] \times N$$

in Mathematical Formula 1,

N is a polymerization degree of the modified conjugated diene-based copolymer,
$X_1$ is a styrene bond volume ratio in the first polymer
$X_2$ is a styrene bond volume ratio in the second copolymer
$y_1$ is a 1,2-vinyl bond volume ratio in butadiene in the first polymer,
$y_2$ is a 1,2-vinyl bond volume ratio in butadiene in the second copolymer,
$X_{VS}$ is 0.0565 + 5.62 $T^{-1}$, $X_{BS}$ is 0.00843 + 10.2 $T^{-1}$, and $X_{VB}$ is 0.00269 + 1.87 $T^{-1}$, where T is room temperature, and the unit thereof is an absolute temperature unit (K).

Here, T means a unit and is an absolute temperature unit (K).

In addition, the 1,2-vinyl bond volume ratio and styrene bond volume ratio in the copolymer are values obtained by measuring and analyzing using Varian VNMR 500 MHz NMR, and when measuring in particular, 1,1,2,2-tetrachloroethane was used as a solvent, 5.97 ppm was calculated as a solvent peak, and the styrene bond and 1,2-vinyl bond volume ratios were calculated considering the peaks of 7.2-6.9 ppm as random styrene, 6.9-6.2 ppm as block styrene, 5.8-5.1 ppm as 1,4-vinyl bond, and 5.1-4.5 ppm as 1,2-vinyl bond.

In the present disclosure, the term "room temperature" means a temperature in a state of nature without heating or cooling, and a temperature of 25 ± 5°C. In Mathematical Formula 1 of the present invention, by using the absolute temperature unit (K), 293K to 303K may be applied.

In the present disclosure, the term "substituted" may mean that hydrogen of a functional group, an atomic group or a compound is substituted with a specific substituent, and if the hydrogen of a functional group, an atomic group or a compound is substituted with a specific substituent, one or a plurality including two or more substituents may be present according to the number of hydrogen present in the functional group, the atomic group or the compound, and if there are a plurality of substituents, each substituent may be the same or different.

In the present disclosure, the term "alkyl group" may mean monovalent aliphatic saturated hydrocarbon, and may include a linear alkyl group such as methyl, ethyl, propyl and butyl; a branched alkyl group such as isopropyl, sec-butyl, tert-butyl and neo-pentyl; and a cyclic saturated hydrocarbon, or a cyclic unsaturated hydrocarbon group including one or two or more unsaturated bonds.

In the present disclosure, the term "alkylene group" may mean divalent aliphatic saturated hydrocarbon such as methylene, ethylene, propylene and butylene.

In the present invention, the term "cycloalkyl group" may mean cyclic saturated hydrocarbon.

In the present disclosure, the term "aryl group" may mean aromatic hydrocarbon, and may include both monocyclic aromatic hydrocarbon in which one ring is formed, or polycyclic aromatic hydrocarbon in which two or more rings are bonded.

In the present disclosure, the term "aralkyl group" is also referred to as aralkyl and may mean the combination of an alkyl group and an aryl group, formed by substituting a hydrogen atom bonded to carbon constituting an alkyl group with an aryl group.

In the present disclosure, the term "single bond" may mean a single covalent bond itself excluding a separate atomic or molecular group.

In the present disclosure, the terms "derived unit", "derived repeating unit" and "derived functional group" may represent a component or a structure comes from a certain material, or the material itself.

In the present disclosure, the terms "comprising", and "having" and the derivatives thereof, though these terms are particularly disclosed or not, do not intended to preclude the presence of optional additional components, steps, or processes. In order to avoid any uncertainty, all compositions claimed by using the term "comprising" may include optional additional additives, auxiliaries, or compounds, including a polymer or any other materials, unless otherwise described to the contrary. In contrast, the term "consisting essentially of ~" excludes unnecessary ones for operation and precludes optional other components, steps or processes from the scope of optional continuous description. The term "consisting of ~" precludes optional components, steps or processes, which are not particularly described or illustrated.

## Measurement methods and conditions

In the present disclosure, "1,2-vinyl bond content" and "styrene bond content" are vinyl content and styrene content in a copolymer and first and second copolymer units, measured and analyzed using Varian VNMRS 500 MHz NMR. For the NMR measurement, 1,1,2,2-tetrachloroethane was used as a solvent, 6.0 ppm was calculated as a solvent peak, and the 1,2-vinyl content and the styrene bond volume in total polymer were respectively calculated and measured considering the peaks of 7.2-6.9 ppm as random styrene, 6.9-6.2 ppm as block styrene, 5.8-5.1 ppm as 1,4-vinyl bond and 1,2-vinyl, and 5.1-4.5 ppm as 1,2-vinyl bond.

In the present disclosure, "weight average molecular weight (Mw), "molecular weight distribution (MWD)" and "unimodal properties" are measured by measuring a molecular weight through gel permeation chromatography (GPC) analysis and obtaining a molecular weight distribution curve. In addition, molecular weight distribution (PDI, MWD, Mw/Mn) is calculated from each molecular weight thus measured. Particularly, GPC is conducted using two columns of PLgel Olexis (Polymer Laboratories Co.) and one column of PLgel mixed-C (Polymer Laboratories Co.) in combination, and polystyrene (PS) as a GPC standard material for calculating the molecular weights. A solvent for measuring GPC is prepared by mixing tetrahydrofuran with 2 wt% of an amine compound.

In the present disclosure, "glass transition temperature (Tg)" is obtained based on ISO 22768:2006 as follows: a differential scanning calorimeter (DSCQ100, TA Co.) is used, and under the circulation of nitrogen in a rate of 50 ml/min, a DSC curve is recorded while elevating the temperature from -100°C in a rate of 10°C/min, and the peak top (inflection point) of the DSC differential curve is measured as the glass transition temperature.

The "Si content" was measured by an ICP analysis method using an inductively coupled plasma optical emission spectroscopy (ICP-OES; Optima 7300DV), and by using the inductively coupled plasma optical emission spectroscopy, measurement was performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr);
2) step 2: initial temp 180°C, rate (temp/hr) 85°C/hr, temp (holdtime) 370°C (2hr); and
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 ml ultrapure water, and performing incineration.

In the present disclosure, the "N content" may be measured through an NSX analysis method, and measurement by the NSX analysis method may use a quantitative analyzer of a trace amount of nitrogen (NSX-2100H). Particularly, the quantitative analyzer of a trace amount of nitrogen (Auto sampler, Horizontal furnace, PMT & Nitrogen detector) was turned on, carrier gas flow amounts were set to 250 ml/min for Ar, 350 ml/min for $O_2$, and 300 ml/min for ozonizer, a heater was set to 800°C, and the analyzer was stood for about 3 hours for stabilization. After stabilizing the analyzer, a calibration curve with calibration curve ranges of 5 ppm, 10 ppm, 50 ppm, 100 ppm and 500 ppm was made using Nitrogen standard (AccuStandard S-22750-01-5 ml), an area corresponding to each concentration was obtained, and then, by using the ratios of concentrations to areas, a straight line was made. After that, a ceramic boat holding 20 mg of a specimen was put in the auto sampler of the analyzer and measurement was conducted to obtain an area. By using the area of the specimen thus obtained and the calibration curve, the N content was calculated.

In this case, the specimen used in the NSX analysis method may be a modified conjugated diene-based polymer from which solvents are removed by putting the specimen in hot water heated by steam and stirring, and may be a specimen from which remaining monomer and remaining modifier are removed. In addition, if oil was added to the specimen, the specimen may be one from which oil was extracted (removed).

In the present invention, a "contraction factor" is computed based on solution viscosity and a light scattering method by measuring a chromatogram using a gel chromatography-light scattering measurement apparatus equipped with a light scattering detector, an RI detector and a viscosity detector, and particularly, an absolute molecular weight was obtained from a light scattering detector and an RI detector using a GPC-light scattering measurement apparatus (GPCmax VE-2001, Malvern Co.) in which a light scattering detector, an RI detector and a viscosity detector were connected in order, wherein three columns using a polystyrene-based gel as a filler were connected (TDA305, Malvern Co.), an intrinsic viscosity [η] on the absolute molecular weight was obtained from the RI detector and the viscosity detector, an intrinsic viscosity of a linear polymer $[\eta]_0$ on the absolute molecular weight was computed through Mathematical Equation 2 below, an average value of the ratio of the intrinsic viscosity ($[\eta]/[\eta]_0$) corresponding to each absolute molecular weight was shown as the contraction factor. In this case, a mixture solution of tetrahydrofuran and triethylamine (THF in TEA: prepared by mixing 5 mmol of triethylamine with 1 L of tetrahydrofuran) was used as an eluent, TSKgel G4000HXL (TOSOH Co.), TSKgel G5000HXL (TOSOH Co.) and TSKgel G6000HXL TOSOH Co.) were used in combination as the columns, a specimen was prepared by dissolving 20 mg of a polymer in 10 mL of THF, 100 μl of a measurement solution was injected into a GPC measurement apparatus, and measurement was conducted at an oven temperature of 40°C under conditions of a THF flow rate of 1.0 mL/min.

[Mathematical Equation 2]

$$[\eta]_0=10^{-3.883}M^{0.771}$$

In Mathematical Equation 2, M is an absolute molecular weight.

**<u>Modified conjugated diene-based copolymer</u>**

The modified conjugated diene-based copolymer according to the present invention is characterized in including a first polymer unit, a second copolymer unit and a functional group derived from a modifier, wherein the first polymer unit includes a repeating unit derived from a conjugated diene-based monomer, the second copolymer unit includes a repeating unit derived from a conjugated diene-based monomer and a repeating unit derived from an aromatic vinyl-based monomer, and the following conditions (i) to (vi) are satisfied:

(i) peaks of a differential curve of a differential scanning calorimetry curve measured by elevating a temperature from -100°C to 100°C at a rate of 10°C/min under a circulation of 50 ml/min of nitrogen, using differential scanning calorimetry based on ISO 22768:2006, are two;
(ii) a glass transition temperature of the first polymer unit is lower than a glass transition temperature of the second copolymer unit;
(iii) the glass transition temperature of the first polymer unit is from -100°C to -40°C;
(iv) the glass transition temperature of the second copolymer unit is from greater than -40°C to 10°C;
(v) the content of the second copolymer unit is from 5 wt% to 40 wt%; and
(vi) an interaction parameter ($\chi_{eff}N$) defined by the following Mathematical Formula 1 at room temperature is 15 or more:

[Mathematical Formula 1]

$$X_{eff}N = [(x_1-x_2)(y_2-y_1)(X_{VS}-X_{BS}) + (y_1-y_2)^2X_{VB}] \times N$$

in Mathematical Formula 1,

N is a polymerization degree of the modified conjugated diene-based copolymer,
$X_1$ is a styrene bond volume ratio in the first polymer
$X_2$ is a styrene bond volume ratio in the second copolymer
$y_1$ is a 1,2-vinyl bond volume ratio in butadiene in the first polymer,
$y_2$ is a 1,2-vinyl bond volume ratio in butadiene in the second copolymer,
$X_{VS}$ is $0.0565 + 5.62\ T^{-1}$, $X_{BS}$ is $0.00843 + 10.2\ T^{-1}$, and $X_{VB}$ is $0.00269 + 1.87T^{-1}$, and here, T is room temperature, and the unit thereof is an absolute temperature unit (K).

According to an embodiment of the present invention, the modified conjugated diene-based copolymer includes the first polymer unit, the second copolymer unit, and the functional group derived from a modifier and satisfies conditions (i) to (vi) at the same time, and may achieve excellent mechanical properties such as tensile properties and viscoelasticity at the same time and may have excellent wet skid resistance and rolling resistance in balance, when the copolymer is used to a rubber compound

Particularly, the modified conjugated diene-based copolymer may have an interaction parameter ($X_{eff}N$) defined by Mathematical Formula 1 of 15 or more, particularly, an interaction parameter ($X_{eff}N$) of 18 or more. In this case, wet skid resistance and rolling resistance may be excellent in balance, and steering properties may also be improved, when the copolymer is used to a rubber compound

Meanwhile, the modified conjugated diene-based copolymer according to an embodiment of the present invention may achieve the objective tasks of the present invention in case of including a first polymer unit, a second copolymer unit and a functional group derived from a modifier, while satisfying the above-described conditions of (i) to (v), and having the interaction parameter in the above-described range or more. Accordingly, an upper limit is not specifically limited, but in order to achieve the objective tasks, a lower limit of 15 or more is required to be satisfied.

Here, the interaction parameter ($X_{eff}N$) is a parameter which is an interaction measure determined by a microstructure (1,2-vinyl bond and styrene bond) in a copolymer, and may be controlled by the ratio of the first polymer unit and the second copolymer unit included in the copolymer and each microstructure of the first polymer unit and the second copolymer unit.

In addition, the modified conjugated diene-based copolymer according to an embodiment of the present invention has two peaks of a differential curve measured by differential scanning calorimetry. Here, the peak of the differential curve measured by differential scanning calorimetry means glass transition temperature. That is, the copolymer has two glass transition temperature values, and the peaks of the differential curve of the differential scanning calorimetry showing the glass transition temperature values are distinguished. In another embodiment, the modified conjugated diene-based copolymer includes a first polymer unit and a second copolymer unit, and the first polymer unit and the second copolymer unit have different glass transition temperature values, and accordingly, the modified conjugated diene-based copolymer may have two glass transition temperature values.

Meanwhile, the first polymer unit may be a first polymer block including a repeating unit derived from a conjugated diene-based monomer, and the second copolymer unit may be a second copolymer block including a repeating unit derived from a conjugated diene-based monomer and a repeating unit derived from an aromatic vinyl-based monomer, and in this case, the second copolymer unit may be a random copolymer, and the random copolymer means the arrangement of the repeating units constituting the copolymer in random.

In addition, in an embodiment of the present invention, the first polymer unit may further include a repeating unit derived from an aromatic vinyl-based monomer as necessary, and in this case, the first copolymer unit may be a copolymer block including a repeating unit derived from a conjugated diene-based monomer and a repeating unit derived from an aromatic vinyl-based monomer, and the copolymer block may be a random copolymer.

The repeating unit derived from a conjugated diene-based monomer may mean a repeating unit constituted by conjugated diene-based monomer during polymerization, and the repeating unit derived from an aromatic vinyl-based monomer may mean a repeating unit constituted by the aromatic vinyl-based monomer during polymerization.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene and 2-halo-1,3-butadiene (halo means a halogen atom).

The aromatic vinyl monomer may be, for example, one or more selected from the group consisting of styrene, $\alpha$-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene.

In another embodiment, each of the first polymer unit and the second copolymer unit may be a copolymer further including a repeating unit derived from a diene-based monomer of 1 to 10 carbon atoms together with the repeating unit derived from the conjugated diene-based monomer. The repeating unit derived from a diene-based monomer may be a repeating unit derived from a diene-based monomer which is different from the conjugated diene-based monomer, and the diene-based monomer which is different from the conjugated diene-based monomer may be, for example, 1,2-butadiene. If each of the first and second copolymer units is a copolymer further including a diene-based monomer, the repeating unit derived from a diene-based monomer may be included in an amount of greater than 0 wt% to 1 wt%, greater than 0 wt% to 0.1 wt%, greater than 0 wt% to 0.01 wt%, or greater than 0 wt% to 0.001 wt%, and within this range, effects of preventing gel formation may be achieved.

In addition, the glass transition temperature of the first polymer unit may be from -100°C to -40°C, particularly, from -95°C to -50°C, and the glass transition temperature of the second copolymer unit may be from greater than -40°C to 10°C, particularly, from -30°C to 0°C.

In addition, the glass transition temperature of the first polymer unit may be lower than the glass transition temperature of the second copolymer unit, particularly, the glass transition temperature of the second copolymer unit may

be higher than the glass transition temperature of the first polymer unit by 40°C to 120°C, or 50°C to 100°C. In this case, the wet skid resistance and rolling resistance of the modified conjugated diene-based copolymer including the first polymer unit and the second copolymer unit may be excellent in balance.

In addition, the glass transition temperature may be flexibly controlled by the presence or absence of the repeating unit derived from an aromatic vinyl-based monomer in the first polymer unit and the second copolymer unit, the content of the repeating unit derived from an aromatic vinyl-based monomer, and the microstructure in each unit (1,2-vinyl bond content and styrene bond content) according to polymerization methods and polymerization conditions.

For example, the first polymer unit may include the repeating unit derived from an aromatic vinyl-based monomer in 0 wt% to 30 wt%, particularly, 0 wt% to 15 wt%, and here, the inclusion of 0 wt% of the repeating unit derived from an aromatic vinyl-based monomer means that the repeating unit derived from an aromatic vinyl-based monomer is not included in the first polymer unit. In addition, the 1,2-vinyl bond content may be 10 parts by weight to 40 parts by weight with respect to 100 parts by weight of the first polymer unit, the second copolymer unit may include the repeating unit derived from an aromatic vinyl-based monomer in 0 wt% to 45 wt%, and the 1,2-vinyl bond content may be 20 parts by weight to 80 parts by weight with respect to 100 parts by weight of the second copolymer unit. Here, the first polymer unit and the second copolymer unit may have the repeating unit content derived from an aromatic vinyl-based monomer and the 1,2-vinyl bond content ranges controlled within the aforementioned ranges, respectively, in a range satisfying the conditions (ii) to (iv). In this case, abrasion resistance and wet skid resistance may be excellent, and rolling resistance may be improved.

Meanwhile, the modified conjugated diene-based copolymer according to an embodiment of the present invention may have the Si and N contents of 50 ppm or more, or 50 ppm to 500 ppm, respectively, based on the total weight of the copolymer, and within these ranges, the mechanical properties such as tensile properties and viscoelasticity properties of a rubber composition including the modified conjugated diene-based copolymer may be excellent. Meanwhile, the Si and N may be derived from a modifier, which will be explained later.

The modifier may be a modifier for modifying the terminals of a polymer, and particularly, may be a modifier having affinity with silica. The modifier having affinity with silica may mean a modifier containing a functional group having affinity with silica in a compound used as a modifier, and the functional group having affinity with silica may mean a functional group having excellent affinity with a filler, particularly, a silica-based filler, and is capable of interacting with the silica-based filler.

The modifier may be, for example, an alkoxysilane-based modifier, particularly, an alkoxysilane-based modifier containing one or more heteroatoms including a nitrogen atom, an oxygen atom, and a sulfur atom. If the alkoxysilane-based compound is used as a modifier, via substitution reaction between an anionic active part positioned at one terminal of an active polymer and an alkoxy group of the alkoxysilane-based modifier, the one terminal of the active polymer may be modified with a silyl group, and accordingly, the affinity with an inorganic filler of the modified conjugated diene-based copolymer including the first copolymer unit may be increased from the functional group derived from the modifier present at the one terminal of the first copolymer unit, and the viscoelasticity of a rubber composition including the modified conjugated diene-based copolymer may be improved. Also, if the alkoxysilane-based compound contains a nitrogen atom, additional effects of increasing physical properties due to the nitrogen atom may be anticipated in addition to the effects derived from the silyl group.

According to an embodiment of the present invention, the modifier may include a compound represented by the following Formula 1:

[Formula 1]

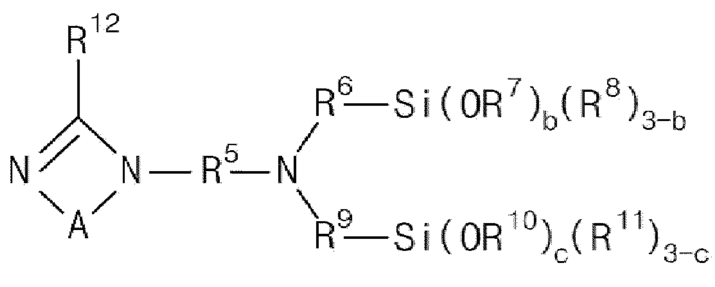

in Formula 1, $R^5$, $R^6$ and $R^9$ may be each independently an alkylene group of 1 to 10 carbon atoms, $R^7$, $R^B$, $R^{10}$ and $R^{11}$ may be each independently an alkyl group of 1 to 10 carbon atoms, $R^{12}$ may be a hydrogen atom or an alkyl group of 1 to 10 carbon atoms, b and c may be each independently 0, 1, 2 or 3, where $b + c \geq 1$ may be satisfied, and A may be

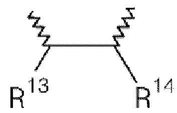

or

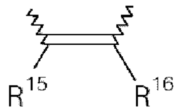

,

where $R^{13}$, $R^{14}$, $R^{15}$ and $R^{16}$ may be each independently a hydrogen atom or an alkyl group of 1 to 10 carbon atoms.

In a particular embodiment, the compound represented by Formula 1 may be one selected from the group consisting of N-(3-(1H-imidazol-1-yl)propyl)-3-(triethoxysilyl)-N-(3-(triethoxysilyl)propyl)propan-1-amine and 3-(4,5-dihydro-1H-imidazol-1-yl)-N,N-bis(3-(triethoxysilyl)propyl)propan-1-amine.

In another embodiment, the modifier may include a compound represented by the following Formula 2:

[Formula 2]

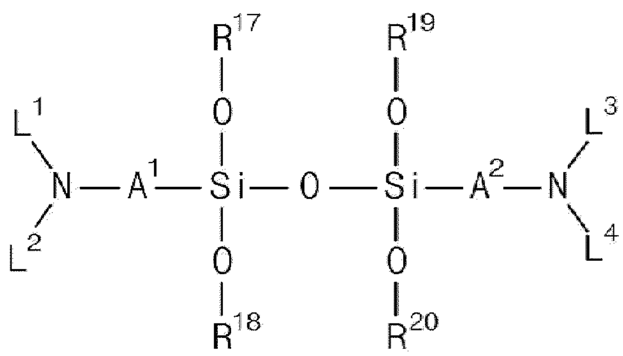

in Formula 2, $A^1$ and $A^2$ may be each independently a divalent kimi of 1 to 20 carbon atoms, which contains an oxygen atom or not, $R^{17}$ to $R^{20}$ may be each independently a monovalent hydrocarbon group of 1 to 20 carbon atoms, $L^1$ to $L^4$ may be each independently a monosubstituted, disubstituted or trisubstituted alkylsilyl group with alkyl groups of 1 to 10 carbon atoms, or a monovalent hydrocarbon group of 1 to 20 carbon atoms, where $L^1$ and $L^2$, and $L^3$ and $L^4$ may be combined with each other to form rings of 1 to 5 carbon atoms, and if $L^1$ and $L^2$, and $L^3$ and $L^4$ are combined with each other to form rings, the rings thus formed may include one to three heteroatoms selected from the group consisting of N, O and S.

In a particular embodiment, in Formula 2, $A^1$ and $A^2$ may be each independently an alkylene group of 1 to 10 carbon atoms, $R^{17}$ to $R^{20}$ may be each independently an alkyl group of 1 to 10 carbon atoms, $L^1$ to $L^4$ may be each independently a trialkylsilyl group which is substituted with an alkyl group of 1 to 5 carbon atoms, or an alkyl group of 1 to 10 carbon atoms, where $L^1$ and $L^2$, and $L^3$ and $L^4$ may be combined with each other to form rings of 1 to 3 carbon atoms, and if $L^1$ and $L^2$, and $L^3$ and $L^4$ are combined with each other to form rings, the rings thus formed may include one to three heteroatoms selected from the group consisting of N, O and S.

In a more particular embodiment, the compound represented by Formula 2 may be one selected from the group consisting of 3,3'-(1,1,3,3-tetramethoxydisiloxane-1,3-diyl)bis(N,N-dimethylpropan-1-amine), 3,3'-(1,1,3,3-tetraethoxydisiloxane-1,3-diyl)bis(N,N-dimethylpropan-1-amine), 3,3'-(1,1,3,3-tetrapropoxydisiloxane-1,3-diyl)bis(N,N-dimethylpropan-1-amine), 3,3'-(1,1,3,3-tetramethoxydisiloxane-1,3-diyl)bis(N,N-diethylpropan-1-amine), 3,3'-(1,1,3,3-tetramethoxydisiloxane-1,3-diyl)bis(N,N-dipropylpropan-1-amine), 3,3'-(1,1,3,3-tetraethoxydisiloxane-1,3-diyl)bis(N,N-diethylpropan-1-amine), 3,3'-(1,1,3,3-tetrapropoxydisiloxane-1,3-diyl)bis(N,N-diethylpropan-1-amine), 3,3'-(1,1,3,3-tetraethoxydisiloxane-1,3-diyl)bis(N,N-dipropylpropan-1-amine), 3,3'-(1,1,3,3-tetrapropoxydisiloxane-1,3-diyl)bis(N,N-dipropylpropan-1-amine), 3,3'-(1,1,3,3-tetramethoxydisiloxane-1,3-diyl)bis(N,N-diethylmethan-1-amine), 3,3'-(1,1,3,3-tetraethoxydisiloxane-1,3-diyl)bis(N,N-diethylmethan-1-amine), 3,3'-(1,1,3,3-tetrapropoxydisiloxane-1,3-diyl)bis(N,N-diethylmethan-1-amine), 3,3'-(1,1,3,3-tetramethoxydisiloxane-1,3-diyl)bis(N,N-dimethylmethan-1-amine), 3,3'-(1,1,3,3-tetramethoxydisiloxane-1,3-diyl)bis(N,N-dipropylmethan-1-amine), 3,3'-(1,1,3,3-tetrapropoxydisiloxane-1,3-diyl)bis(N,N-dimethylmethan-1-amine), 3,3'-(1,1,3,3-tetrapropoxydisiloxane-1,3-diyl)bis(N,N-dipropylmethan-1-amine), 3,3'-(1,1,3,3-tetraethoxydisiloxane-1,3-diyl)bis(N,N-dimethylmethan-1-amine), 3,3'-(1,1,3,3-tetraethoxydisiloxane-1,3-diyl)bis(N,N-dipropylmethan-1-amine), N,N'-((1,1,3,3-tetramethoxydisiloxane-1,3-diyl)bis(propan-3,1-diyl))bis(1,1,1-trimethyl-N-(trimethylsilyl)silanamine), N,N'-((1,1,3,3-tetraethoxydisiloxane-1,3-diyl)bis(propan-3,1-diyl))bis(1,1,1-trimethyl-N-(trimethylsilyl)silanamine), N,N'-((1,1,3,3-tetrapropoxydisiloxane-1,3-diyl)bis(propan-3,1-diyl))bis(1,1,1-trimethyl-N-(trimethylsilyl)silanamine), N,N'-((1,1,3,3-tetramethoxydisiloxane-1,3-diyl)bis(propan-3,1-diyl))bis(1,1,1-trimethyl-N-phenylsilanamine), N,N'-((1,1,3,3-tetraethoxydisiloxane-1,3-diyl)bis(propan-3,1-diyl))bis(1,1,1-trimethyl-N-phenylsilanamine), N,N'-((1,1,3,3-tetrapropoxydisiloxane-1,3-diyl)bis(propan-3,1-diyl))bis(1,1,1-trimethyl-N-phenylsilanamine), 1,3-bis(3-(1H-imidazol-1-yl)propyl)-1,1,3,3-tetramethoxydisiloxane, 1,3-bis(3-(1H-imidazol-1-yl)propyl)-1,1,3,3-tetraethoxydisiloxane, and 1,3-bis(3-(1H-imidazol-1-yl)propyl)-1,1,3,3-tetrapropoxydisiloxane.

In another embodiment, the modifier may include a compound represented by the following Formula 3:

[Formula 3]

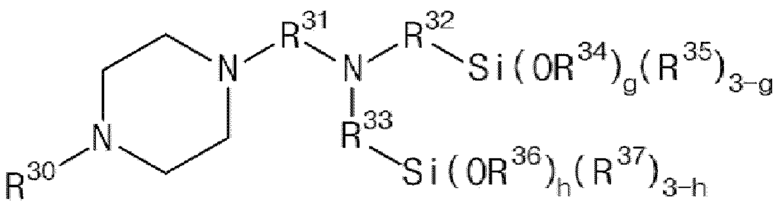

in Formula 3, $R^{30}$ may be a monovalent hydrocarbon group of 1 to 30 carbon atoms, $R^{31}$ to $R^{33}$ may be each independently an alkylene group of 1 to 10 carbon atoms, $R^{34}$ to $R^{37}$ may be each independently an alkyl group of 1 to 10 carbon atoms, and g and h may be each independently 0, or an integer selected from 1 to 3, where g + h may be an integer of 1 or more.

In another embodiment, the modifier may include a compound represented by the following Formula 4:

[Formula 4]

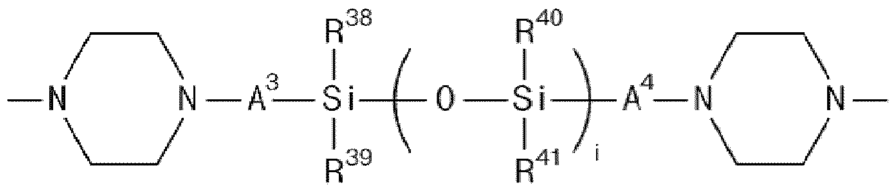

in Formula 4, $A^3$ and $A^4$ may be each independently an alkylene group of 1 to 10 carbon atoms, $R^{33}$ to $R^{41}$ may be each independently an alkyl group of 1 to 10 carbon atoms, or an alkoxy group of 1 to 10 carbon atoms, and i may be an integer selected from 1 to 30.

In another embodiment, the modifier may include one or more selected from the group consisting of 3,4-bis(2-methoxyethoxy)-N-(4-(trimethylsilyl)butyl)aniline, N,N-diethyl-3-(7-methyl-3,6,8,11-tetraoxa-7-silatridecan-7-yl)propan-1-amine, 2,4-bis(2-methoxyethoxy)-6-((trimethylsilyl)methyl)-1,3,5-triazine and 3,14-dimethoxy-3,8,8,13-tetramethyl-2,14-dioxa-7,9-dithia-3,8,13-trisilapentadecane.

In another embodiment, the modifier may include a compound represented by the following Formula 5:

[Formula 5]

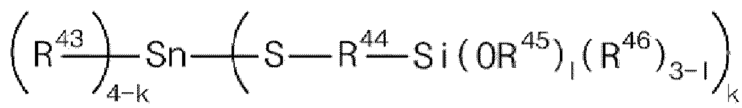

in Formula 5, $R^{43}$, $R^{45}$ and $R^{46}$ may be each independently an alkyl group of 1 to 10 carbon atoms, $R^{44}$ may be an alkylene group of 1 to 10 carbon atoms, and k may be an integer selected from 1 to 4.

In a more particular embodiment, the compound represented by Formula 5 may be one selected from the group consisting of 8,8-dibutyl-3,13-dimethoxy-3,13-dimethyl-2,14-dioxa-7,9-dithia-3,13-disila-8-stannapentadecane, 8,8-dimetyl-3,13-dimethoxy-3,13-dimethyl-2,14-dioxa-7,9-dithia-3,13-disila-8-stannapentadecane, 8,8-dibutyl-3,3,13,13-tetramethoxy-2,14-dioxa-7,9-dithia-3,13-disila-8-stannapentadecane and 8-butyl-3,3,13,13-tetramethoxy-8-((3-(trimehtoxysilyl)propyl)thio)-2,14-dioxa-7,9-dithia-3,13-disila-8-stannapentadecane.

In addition, in the modified conjugated diene-based copolymer according to an embodiment of the present invention, the amount of the second copolymer unit may be 5 wt% to 40 wt%, particularly, 15 wt% to 30 wt%, and in this case, the glass transition temperature and microstructure of the modified conjugated diene-based copolymer may be suitably controlled, and wet skid resistance and rolling resistance may be excellent in balance without deteriorating abrasion resistance.

In another embodiment, the modified conjugated diene-based copolymer may have the styrene bond content of greater than 0 wt% to 25 wt%, and the 1,2-vinyl bond content of 10 wt% to 50 wt%, and particularly, the styrene bond content may be greater than 0 wt% to 20 wt%, and the 1,2-vinyl bond content may be 10 wt% or more and 30 wt% or less.

Here, the styrene bond content and 1,2-vinyl bond content of the modified conjugated diene-based copolymer may be controlled according to the styrene bond content difference and the 1,2-vinyl bond content difference of the first polymer unit and the second copolymer unit in the modified conjugated diene-based copolymer, and in another embodiment, may be controlled according to the content ratio of the first polymer unit and the second copolymer unit in the modified conjugated diene-based copolymer, and the styrene bond content difference and the 1,2-vinyl bond content difference of the first polymer unit and the second copolymer unit. Here, the content of the second copolymer unit, and the styrene bond content and the 1,2-vinyl bond content of the first polymer unit and the second copolymer unit may be dependent on the ratio of monomers, and polymerization method and conditions, for example, may be influenced by an initial polymerization conversion ratio, the injection amount and injection point of a polar additive, and the injection amount and injection point of monomers.

In addition, the modified conjugated diene-based copolymer may have a weight average molecular weight (Mw) measured by gel permeation chromatography (GPC) of 300,000 g/mol to 2,000,000 g/mol, 400,000 g/mol to 1,500,000 g/mol, or 500,000 g/mol to 1,200,000 g/mol, and within this range, rolling resistance and wet skid resistance may be even better in balance.

In addition, the modified conjugated diene-based copolymer may have a unimodal molecular weight distribution curve by gel permeation chromatography (GPC) and molecular weight distribution of 1.0 to less than 1.7, and in this case, the unimodal curve shape and molecular weight distribution may be satisfied at the same time by a continuous type polymerization, which will be explained later.

In addition, the modified conjugated diene-based copolymer according to an embodiment of the present invention is required to satisfy mooney viscosity measured based on ASTM D1646 conditions of 40 to 120, preferably, 45 to 100. The measure for evaluating processability may be a lot, but if the mooney viscosity satisfies the range, processability may be significantly excellent.

In another embodiment, the modified conjugated diene-based polymer may have a contraction factor (g') obtained by the measurement by a gel permeation chromatography-light scattering method equipped with a viscosity detector of 0.7 or more, particularly, 0.75 to 1.0, more particularly, 0.8 to 1.0.

Here, the contraction factor (g') obtained by the measurement by a gel permeation chromatography-light scattering method is a ratio of the intrinsic viscosity of a branched polymer in contrast to the intrinsic viscosity of a linear polymer, having the same absolute molecular weight, and may be used as an index of the branch structure of the polymer having a branch, i.e., as an index of the ratio occupied by the branch. For example, the number of branches of a corresponding polymer tends to increase according to the decrease of the contraction factor, and accordingly, if polymers having an equivalent absolute molecular weight are compared, the contraction factor decreases with the increase of the branches, and the contraction factor may be used as the index of the degree of branching.

The modified conjugated diene-based copolymer according to an embodiment of the present invention may include, as described above, the first polymer unit, the second copolymer unit and the functional group derived from a modifier and may have the styrene bond content, the 1,2-vinyl bond content, the weight average molecular weight, the mooney viscosity and the contraction factor, controlled in the aforementioned ranges within ranges satisfying conditions (i) to (vi) at the same time. In this case, wet skid resistance and rolling resistance may be even better in balance without fear of deteriorating abrasion resistance, when the copolymer is used to a rubber compound.

## Preparation method of modified conjugated diene-based copolymer

In order to prepare the modified conjugated diene-based polymer, the present invention provides a method of preparing a modified conjugated diene-based polymer.

The method of preparing the modified conjugated diene-based copolymer may include a step of polymerizing a conjugated diene-based monomer, or a conjugated diene-based monomer and an aromatic vinyl-based monomer in the presence of a polymerization initiator and a polar additive in a hydrocarbon solvent to prepare an active polymer (S1); and a step of reacting the active polymer prepared in step (S1) with a modifier (S2), wherein polymerization reaction (S1) and modification reaction (S2) are performed by a continuous type, step (S1) is performed in two or more polymerization

reactors, a polymerization conversion ratio in a first polymerization reactor among the polymerization reactors may be 70% to 80%, and the polymerization reaction may be performed by additionally adding an aromatic vinyl-based monomer and a polar additive at a point where the polymerization conversion ratio after initiating polymerization is 70% to 95%.

Hereinafter, the modified conjugated diene-based copolymer thus prepared and the characteristics on the modifier used in the reaction are overlapped with the above-description, and the explanation thereon will be omitted.

The hydrocarbon solvent is not specifically limited, but may be, for example, one or more selected from the group consisting of n-pentane, n-hexane, n-heptane, isooctane, cyclohexane, toluene, benzene and xylene.

According to an embodiment of the present invention, the polymerization initiator may be used in 0.01 mmol to 10 mmol, 0.05 mmol to 5 mmol, 0.1 mmol to 2 mmol, 0.1 mmol to 1 mmol, or 0.15 to 0.8 mmol based on total 100 g of the monomer. The polymerization initiator may be, for example, one or more selected from the group consisting of methyllithium, ethyllithium, propyllithium, isopropyllithium, n-butyllithium, s-butyllithium, t-butyllithium, hexyllithium, n-decyllithium, t-octyllithium, phenyllithium, 1-naphthyl lithium, n-eicosyl lithium, 4-butylphenyl lithium, 4-tolyl lithium, cyclohexyl lithium, 3,5-di-n-heptylcyclohexyl lithium, 4-cyclopentyl lithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

The polymerization of step (S1) may be, for example, an anionic polymerization, particularly, a living anionic polymerization by which an anionic active part is formed at the polymerization terminal through a propagation reaction by anions. In addition, the polymerization of step (S1) may be a polymerization with heating, an isothermal polymerization, or a polymerization at a constant temperature (adiabatic polymerization). Here, the polymerization at a constant temperature may mean a polymerization method including a step of polymerizing using self-generated heat of reaction without optionally applying heat after adding a polymerization initiator, the polymerization with heating may mean a polymerization method including injecting the polymerization initiator and then, increasing the temperature by optionally applying heat, and the isothermal polymerization may mean a polymerization method by which the temperature of a polymer is kept constant by increasing heat by applying heat or taking heat after injecting the polymerization initiator.

In addition, according to an embodiment of the present invention, the polymerization of step (S1) may be performed by further adding a diene-based compound of 1 to 10 carbon atoms in addition to the conjugated diene-based monomer, and in this case, effect of preventing the formation of gel on the wall of a reactor during operation for a long time may be achieved. The diene-based compound may include, for example, 1,2-butadiene.

In addition, according to an embodiment of the present invention, the polymerization of step (S1) is performed in two or more polymerization reactors, and a polymerization conversion ratio in the first polymerization reactor among the polymerization reactors may be from 70% to 85%, particularly, from 70% to 80%. That is, the polymerization of step (S1) may be only performed until the polymerization conversion ratio in the first polymerization reactor becomes 70% or more, from 70% to 85%, or from 70% to 80%. Within this range, side reactions generated while forming a polymer after initiating polymerization reaction may be restrained and a polymer with a linear structure may be induced during polymerization, and accordingly, the aforementioned unimodal molecular weight distribution curve may be obtained, and the aforementioned molecular weight distribution may be satisfied. In this case, the polymerization conversion ratio may be controlled according to the reaction temperature, the retention time in the reactor, etc.

The polymerization in the first polymerization reactor may be performed in a temperature range of, for example, 80°C or less, from -20°C to 80°C, from 0°C to 80°C, from 0°C to 70°C, or from 10°C to 70°C, and within this range, the molecular weight distribution of the polymer may be controlled narrow, and excellent effects of improving physical properties may be shown.

In addition, the polymerization of step (S1) may be performed by additionally adding an aromatic vinyl-based monomer and a polar additive at a point where the polymerization conversion ratio is from 70% to 95% after initiating polymerization, and in this case, the amount ratio of the first polymer unit and the second copolymer unit in the modified conjugated diene-based copolymer thus prepared and the microstructure (styrene bond and 1,2-vinyl bond contents) in the first polymer unit and the second copolymer unit may be controlled, and the interaction parameter may be controlled as described above, and as a result, the modified conjugated diene-based copolymer may favorably satisfy the conditions defined by (i) to (vi) at the same time.

More particularly, the polymerization of step (S1) may be performed in two or more polymerization reactors, a conjugated diene-based monomer, or a conjugated diene-based monomer and an aromatic vinyl-based monomer may be polymerized in the presence of a polymerization initiator and a polar additive in a hydrocarbon solvent in the first polymerization reactor until a polymerization conversion ratio becomes 70% or more, or 70% to 85% to prepare an active polymer having the polymerization conversion ratio, and the polymerization may be continued in a second polymerization reactor and subsequent polymerization reactors, while an aromatic vinyl-based monomer and a polar additive are additionally injected at a point where a polymerization conversion ratio after initiating polymerization in the first polymerization reactor is from 70% to less than 95%. In this case, the additionally injected aromatic vinyl-based monomer and polar additive may be injected simultaneously or one by one, and may be injected at one point among the points within the range, in installments at various points among the points within the range, or continuously within the points in the range.

In this case, the additionally injected aromatic vinyl-based monomer and polar additive may be used in suitable amounts within ranges satisfying the aforementioned interaction parameter difference.
In another embodiment, the aromatic vinyl-based monomer additionally injected may be used in an amount of 5 g to 25 g, or 5 g to 20 g based on 100 g of the monomer used at the initiation of polymerization, and the polar additive additionally injected may be used in 0.001 g to 10 g, or 0.01 g to 1 g, more preferably, 0.02 g to 0.5 g with respect to 100 g of the monomer used for the initiation of polymerization. If the aromatic vinyl-based monomer and the polar additive additionally injected are controlled to the above-described amounts, the control of the microstructure of the polymer to satisfy the interaction parameter difference may be more advantageous.
The total amount used of the polar additive used in the polymerization of step (S1) may be in a ratio of 0.001 g to 50 g, or 0.002 g to 1.0 g based on total 100 g of the monomer. In another embodiment, the total amount used of the polar additive may be in a ratio of greater than 0 g to 1 g, 0.01 g to 1 g, or 0.1 g to 0.9 g based on total 100 g of the polymerization initiator. Here, the total amount used of the polar additive includes the additionally injected amount of the polar additive.
In another embodiment, the polymerization in a reactor to which an aromatic vinyl-based monomer and a polar additive are additionally injected at a point where a polymerization conversion ratio is from 70% to less than 95%, may be performed at a temperature range of, for example, 80°C or less, -20°C to 80°C, 0°C to 80°C, 0°C to 70°C or 10°C to 70°C, and within this range, the molecular weight distribution of the polymer may be controlled narrow, and excellent improving effects of physical properties may be achieved.
Meanwhile, additionally, to more easily meet the conditions of the present invention of (i) to (iii), the polymerization temperature of a first reactor and a reactor to which an aromatic vinyl-based monomer and a polar additive are additionally injected afterward may have influence. In this case, the polymerization temperature of the reactor to which an aromatic vinyl-based monomer and a polar additive are additionally injected may preferably be controlled to lower than the polymerization temperature of the first reactor, and the polymerization temperature of the reactor to which an aromatic vinyl-based monomer and a polar additive are additionally injected may preferably be 60°C or less.
The polar additive may be, for example, one or more selected from the group consisting of tetrahydrofuran, ditetrahydrofurylpropane, diethyl ether, cyclopentyl ether, dipropyl ether, ethylene methyl ether, ethylene dimethyl ether, diethylene glycol, dimethyl ether, tert-butoxy ethoxy ethane, bis(3-dimethylaminoethyl)ether, (dimethylaminoethyl) ethyl ether, trimethylamine, triethylamine, tripropylamine, and tetramethylethylenediamine, and may particularly be triethylamine or tetramethylethylenediamine.
Meanwhile, the polymerization conversion ratio may be determined, for example, by measuring the solid concentration in a copolymer solution phase including the copolymer during polymerization, and in a particular embodiment, in order to secure the copolymer solution, a cylinder type container is installed at the outlet of each polymerization reactor to fill up a certain amount of the copolymer solution in the cylinder type container, and then, the cylinder type container is separated from the reactor, the weight (A) of the cylinder filled with the copolymer solution is measured, the copolymer solution filled in the cylinder type container is transported to an aluminum container, for example, an aluminum dish, the weight (B) of the cylinder type container from which the copolymer solution is removed is measured, the aluminum container containing the copolymer solution is dried in an oven of 140°C for 30 minutes, the weight (C) of a dried polymer is measured, and calculation is performed according to the following Mathematical Formula 3:

[Mathematical Formula 3]

$$\text{Polymer conversion ratio (\%)} = \frac{\text{Weight}(C)}{\left[\left(\text{Weight}(A) - \text{Weight}(B)\right)\ \text{x Total solid content}\ (TSC)\right]} \text{x}\ 100$$

in Mathematical Formula 3, the total solid content is the total solid content in a copolymer solution separated from each reactor and is the weight percent of the solid content with respect to 100% of the copolymer solution. For example, if the total solid content is 20 wt%, calculation may be performed by substituting 20/100, i.e., 0.2 in Mathematical Formula 3.
Meanwhile, the polymer polymerized in the first reactor may be transported to polymerization reactors before a modification reactor in order, and polymerization may be performed until the final polymerization conversion ratio becomes 95% or more. After performing the polymerization in the first reactor, the polymerization conversion ratio for each reactor of the second reactor, or from the second reactor to the polymerization reactor before the modification reactor may be suitably controlled to control molecular weight distribution.
In addition, the active polymer prepared by step (S1) may mean a polymer in which a copolymer anion and the organometallic cation of the polymerization initiator are combined.
The term "polymer" used in the present invention may mean an intermediate of a polymer type, which is under polymerization in each reactor during performing step (S1) or may mean a polymer with a polymerization conversion ratio of less than 95% under polymerization in a reactor, after finishing step (S1) or step (S2) and prior to obtaining an active

polymer or a modified conjugated diene-based polymer.

According to an embodiment of the present invention, in the reaction of step (S2), the modifier may be used in an amount of 0.01 mmol to 10 mmol based on total 100 g of the monomer. In another embodiment, the modifier may be used in a molar ratio of 1:0.1 to 10, 1:0.1 to 5, or 1:0.1 to 1:3, based on 1 mol of the polymerization initiator of step (S1).

In addition, according to an embodiment of the present invention, the modifier may be injected into a modification reactor, and step (S2) may be conducted in the modification reactor. In another embodiment, the modifier may be injected into a transporting part for transporting the active polymer prepared in step (S1) to a modification reactor for conducting step (S2), and the reaction may be performed by the mixing of the active polymer and the modifier in the transporting part. In this case, the reaction may be modification reaction for simply coupling the modifier with the active polymer, or coupling reaction for connecting the active polymer based on the modifier.

Meanwhile, in the preparation method of the modified conjugated diene-based copolymer, a step of additionally injecting a conjugated diene-based monomer to the active polymer prepared in step (S1) and reacting may be further performed prior to the modification reaction of step (S2), and in this case, modification reaction afterward may become more favorable. Here, the conjugated diene-based monomer may be injected in 1 mol to 100 mol with respect to 1 mol of the active polymer.

According to the present invention, a rubber composition including the modified conjugated diene-based copolymer is provided.

The rubber composition may include the modified conjugated diene-based copolymer in an amount of 10 wt% or more, 10 wt% to 100 wt%, or 20 wt% to 90 wt%, and within this range, mechanical properties such as tensile strength and abrasion resistance are excellent, and effects of excellent balance between physical properties may be achieved.

In addition, the rubber composition may further include other rubber components, if needed, in addition to the modified conjugated diene-based copolymer, and in this case, the rubber components may be included in an amount of 90 wt% or less based on the total weight of the rubber composition. In a particular embodiment, the other rubber components may be included in an amount of 1 part by weight to 900 parts by weight based on 100 parts by weight of the modified conjugated diene-based copolymer.

The rubber component may be, for example, a natural rubber or a synthetic rubber, and may particularly be a natural rubber (NR) including cis-1,4-polyisoprene; a modified natural rubber which is obtained by modifying or purifying a common natural rubber, such as an epoxidized natural rubber (ENR), a deproteinized natural rubber (DPNR), and a hydrogenated natural rubber; and a synthetic rubber such as a styrene-butadiene copolymer (SBR), a polybutadiene (BR), a polyisoprene (IR), a butyl rubber (IIR), an ethylene-propylene copolymer, a polyisobutylene-co-isoprene, a neoprene, a poly (ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), a polysulfide rubber, an acryl rubber, a urethane rubber, a silicone rubber, an epichlorohydrin rubber, and a halogenated butyl rubber, and any one or a mixture of two or more thereof may be used.

The rubber composition may include a filler in 0.1 parts by weight to 200 parts by weight, or 10 parts by weight to 120 parts by weight based on 100 parts by weight of the modified conjugated diene-based copolymer of the present invention. The filler may be, for example, a silica-based filler, particularly, wet silica (hydrated silicate), dry silica (anhydrous silicate), calcium silicate, aluminum silicate, colloid silica, etc., and preferably, the filler may be wet silica which has the most significant improving effect of destruction characteristics and compatible effect of wet grip. In addition, the rubber composition may further include a carbon-based filler, if needed.

In another embodiment, if silica is used as the filler, a silane coupling agent may be used together for the improvement of reinforcing and low exothermic properties. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzoyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulf ide, and any one or a mixture of two or more thereof may be used. Preferably, bis(3-triethoxysilylpropyl)polysulfide or 3-trimethoxysilylpropylbenzothiazyltetrasulfide may be used in consideration of the improving effect of reinforcing properties.

In addition, in the rubber composition according to an embodiment of the present invention, since a modified conjugated diene-based copolymer in which a functional group having high affinity with silica is brought in an active part is used as a rubber component, the mixing amount of the silane coupling agent may be smaller than a common case. Thus, the silane coupling agent may be used in an amount of 1 part by weight to 20 parts by weight, or 5 parts by weight to 15 parts by weight based on 100 parts by weight of silica, and within the above amount range, effects as a coupling agent may be

sufficiently shown, and effects of preventing gelation of a rubber component may be achieved.

The rubber composition according to an embodiment of the present invention may be sulfur crosslinkable, and may further include a vulcanizing agent. The vulcanizing agent may particularly be a sulfur powder and may be included in an amount of 0.1 parts by weight to 10 parts by weight based on 100 parts by weight of a rubber component, and within the above amount range, elasticity and strength required for a vulcanized rubber composition may be confirmed, and at the same time, an excellent fuel efficiency may be achieved.

The rubber composition according to an embodiment of the present invention may further include various additives used in a common rubber industry in addition to the above components, particularly, a vulcanization accelerator, a process oil, a plasticizer, an antiaging agent, a scorch preventing agent, a zinc white(zinc oxide), stearic acid, a thermosetting resin, or a thermoplastic resin.

The vulcanization accelerator may include, for example, thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG), in an amount of 0.1 parts by weight to 5 parts by weight based on 100 parts by weight of the rubber component.

The process oil acts as a softener in a rubber composition and may include, for example, paraffin-based, naphthene-based, aromatic compounds or plant-based oils(e.g. soybeen oil). The aromatic process oil may be used in consideration of tensile strength and abrasion resistance, and the naphthene-based or paraffin-based process oil may be used in consideration of hysteresis loss and properties at a low temperature. The process oil may be included in an amount of 100 parts by weight or less based on 100 parts by weight of the rubber component. Within the above-described range, the deterioration of the tensile strength and low exothermic properties (low fuel consumption ratio) of the vulcanized rubber may be prevented.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature, in an amount of 0.1 parts by weight to 6 parts by weight based on 100 parts by weight of the rubber component.

The rubber composition according to an embodiment of the present invention may be obtained by mixing using a mulling apparatus such as a banbury mixer, a roll, and an internal mixer according to a mixing prescription, and a rubber composition having low exothermic properties and good abrasion properties may be obtained by a vulcanization process after a molding process.

Therefore, the rubber composition may be useful to the manufacture of each part of a tire such as a tire tread, an undertread, a sidewall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may be a tire or include a tire tread.

## Examples

Hereinafter, the present invention will be explained in more detail referring to embodiments. Embodiments according to the present invention may be modified into various other types, and the scope of the present invention should not be limited to the embodiments described below. The embodiments of the present invention are provided for completely explaining the present invention to a person having an average knowledge in the art.

### Example 1

To a first reactor among three continuous stirring tank reactors (CSTR), continuously injected were n-hexane in a flow rate of 8.6 kg/hr, a solution in which 60 wt% of styrene was dissolved in n-hexane in a flow rate of 0.29 kg/h and a solution in which 60 wt% of 1,3-butadiene was dissolved in n-hexane in a flow rate of 2.7 kg/hr, as first monomer solutions, an initiator solution in which 2 wt% of n-butyllithium was dissolved in n-hexane in a flow rate of 40 g/hr, a first polar additive solution in which 0.2 wt% of ditetrahydrofurylpropane was dissolved in n-hexane as a first polar additive in a flow rate of 10 g/hr, and a solution in which 15 wt% of 1,2-butadiene was dissolved in n-hexane in a flow rate of 1 g/hr. In this case, the internal temperature of the reactor was maintained to 60°C, and when a polymerization conversion ratio reached 75%, a polymer was transported from the first reactor to a second reactor through a transport pipe.

Then, the temperature of the second reactor was maintained to 55°C, a second monomer solution in which 60 wt% of styrene was dissolved in n-hexane was continuously injected in a flow rate of 200 g/hr, and a second polar additive solution in which 2 wt% of ditetrahydrofurylpropane was dissolved in n-hexane as a second polar additive was continuously injected in a flow rate of 100 g/hr to involve in the reaction. When a polymerization conversion ratio reached 95% or more, a 1,3-butadiene solution in which 60 wt% of 1,3-butadiene was dissolved in n-hexane was injected in a flow rate of 50 g/h, and the reaction was continued. After that, a polymer was transported from the second reactor to a third

reactor through a transport pipe.

After that, the polymer of the second reactor thus obtained was continuously supplied to the third reactor, and a solution in which 5 wt% of 3,3'-(1,1,3,3-tetramethoxydisiloxan-1,3-diyl)bis(N,N-diethylpropan-1-amine) was dissolved was continuously supplied as a modifier to perform modification reaction (n-butyllithium: modifier = 1: 1 molar ratio). Then, to a polymerization solution discharged from the third reactor, an IR1520 (BASF Co.) solution in which 30 wt% of an antioxidant was dissolved, was injected in a rate of 30 g/h and stirred. The polymer thus obtained was injected in hot water heated with steam, stirred to remove solvents and roll dried to remove remaining solvents and water to prepare a modified conjugated diene-based copolymer.

## Example 2

A modified conjugated diene-based copolymer was prepared by performing the same method as in Example 1 except for injecting a solution in which 60 wt% of 1,3-butadiene was dissolved in n-hexane as the first monomer solution in a flow rate of 2.9 kg/hr, and a solution in which 60 wt% of styrene was dissolved in n-hexane as the second monomer solution in a flow rate of 370 g/hr, in Example 1.

## Example 3

A modified conjugated diene-based copolymer was prepared by performing the same method as in Example 2 except for continuously injecting a solution in which 5 wt% of 3,3'-(1,1,3,3-tetramethoxydisiloxan-1,3-diyl)bis(1-(N-methylpiperazinyl)propane was dissolved in n-hexane instead of 3,3'-(1,1,3,3-tetramethoxydisiloxan-1,3-diyl)bis(N,N-diethylpropan-1-amine) and performing modification reaction, in Example 2 (n-butyllithium: modifier = 1: 1 molar ratio).

## Comparative Example 1

To a first reactor among three continuous stirring tank reactors (CSTR), continuously injected were n-hexane in a flow rate of 8.6 kg/hr, a solution in which 60 wt% of styrene was dissolved in n-hexane in a flow rate of 0.6 kg/h and a solution in which 60 wt% of 1,3-butadiene was dissolved in n-hexane in a flow rate of 2.7 kg/hr, as the first monomer solutions, an initiator solution in which 2 wt% of n-butyllithium was dissolved in n-hexane in a flow rate of 40 g/hr, a first polar additive solution in which 2 wt% of ditetrahydrofurylpropane was dissolved in n-hexane as a first polar additive in a flow rate of 200 g/hr, and a solution in which 15 wt% of 1,2-butadiene was dissolved in n-hexane in a flow rate of 1 g/hr. In this case, the internal temperature of the reactor was maintained to 60°C, and when a polymerization conversion ratio reached 70%, a polymer was transported from the first reactor to a second reactor through a transport pipe.

Then, the temperature of the second reactor was maintained to 55°C, and when a polymerization conversion ratio reached 95% or more, a 1,3-butadiene solution in which 60 wt% of 1,3-butadiene was dissolved in n-hexane was injected in a rate of 50 g/h, and the reaction was continued. Then, a polymer was transported from the second reactor to a third reactor through a transport pipe.

After that, the polymer of the second reactor thus obtained was continuously supplied to a third reactor, and a solution in which 5 wt% of 3,3'-(1,1,3,3-tetramethoxydisiloxan-1,3-diyl)bis(N,N-diethylpropan-1-amine) was dissolved as a modifier was continuously supplied to perform modification reaction (n-butyllithium: modifier = 1: 1 molar ratio).

After that, to a polymerization solution discharged from the second reactor, an IR1520 (BASF Co.) solution in which 30 wt% of an antioxidant was dissolved, was injected in a rate of 30 g/h and stirred. The polymer thus obtained was injected into hot water heated with steam, stirred to remove solvents and roll dried to remove remaining solvents and water to prepare a modified conjugated diene-based copolymer.

## Comparative Example 2

To a first reactor among three continuous stirring tank reactors (CSTR), continuously injected were n-hexane in a flow rate of 8.6 kg/hr, a solution in which 60 wt% of styrene was dissolved in n-hexane in a flow rate of 0.29 kg/hr and a solution in which 60 wt% of 1,3-butadiene was dissolved in a flow rate of 2.8 kg/hr, as the first monomer solutions, an initiator solution in which 2 wt% of n-butyllithium was dissolved in n-hexane in a flow rate of 40 g/hr, a first polar additive solution in which 0.2 wt% of ditetrahydrofurylpropane was dissolved in n-hexane as a first polar additive in a flow rate of 10 g/hr, and a solution in which 15 wt% of 1,2-butadiene was dissolved in n-hexane in a flow rate of 1 g/hr. In this case, the internal temperature of the reactor was maintained to 60°C, and when a polymerization conversion ratio reached 71%, a polymer was transported from the first reactor to a second reactor through a transport pipe.

Then, the temperature of the second reactor was maintained to 55°C, and a second monomer solution in which 60 wt% of styrene was dissolved in n-hexane was continuously injected in a flow rate of 70 g/hr, and a second polar additive solution in which 2 wt% of ditetrahydrofurylpropane was dissolved in n-hexane as a second polar additive was

continuously injected in a flow rate of 150 g/hr. When a polymerization conversion ratio reached 95% or more, a 1,3-butadiene solution in which 60 wt% of 1,3-butadiene was dissolved in n-hexane was injected in a rate of 50 g/hr, and the reaction was continued. Then, a polymer was transported from the second reactor to a third reactor through a transport pipe.

After that, the polymer of the second reactor thus obtained was continuously supplied to the third reactor, and a solution in which 5 wt% of 3,3'-(1,1,3,3-tetramethoxydisiloxan-1,3-diyl)bis(1-(N-methylpiperazilyl)propane was dissolved as a modifier was continuously supplied to perform modification reaction (n-butyllithium: modifier = 1: 1 molar ratio).

After that, to a polymerization solution discharged from the third reactor, an IR1520 (BASF Co.) solution in which 30 wt% of an antioxidant was dissolved, was injected in a rate of 30 g/h and stirred. The polymer thus obtained was injected in hot water heated with steam, stirred to remove solvents and roll dried to remove remaining solvents and water to prepare a modified conjugated diene-based copolymer.

**Comparative Example 3**

A modified conjugated diene-based copolymer was prepared by performing the same method as in Comparative Example 2 except for injecting the second polar additive solution in a rate of 250 g/hr, in Comparative Example 2.

**Experimental Examples**

**Experimental Example 1**

With respect to each of the copolymers prepared in the Examples and Comparative Examples, differences of styrene bond content and 1,2-vinyl bond content between the first copolymer unit and the second copolymer unit, and the glass transition temperature, weight average molecular weight (Mw, x $10^3$ g/mol), molecular weight distribution (PDI, MWD), and molecular weight distribution curve of the modified conjugated diene-based copolymer were measured, respectively, and the results are shown in Table 1 below.

1) Glass transition temperature (Tg)

By using a differential scanning calorimetry (DSCQ100, TA Co.) based on ISO 22768:2006, a differential scanning calorimetry curve (DSC curve) was recorded while elevating the temperature from -100°C in a rate of 10°C/min under a nitrogen stream of 50 ml/min, and the peak top (inflection point) of the DSC differential curve was recognized as the glass transition temperature, and the number of peaks was confirmed.

2) Weight average molecular weight (Mw), molecular weight distribution (MWD) and molecular weight distribution curve

Under the conditions below using gel permeation chromatography (GPC, PL GPC220, Agilent Technologies), a weight average molecular weight (Mw) and a number average molecular weight (Mn) were measured, a molecular weight distribution curve was obtained, and molecular weight distribution (PDI, MWD, Mw/Mn) was calculated from each molecular weight thus measured.

- Column: using two of PLgel Olexis (Polymer Laboratories Co.) and one of PLgel mixed-C (Polymer Laboratories Co.) in combination
- Solvent: using a mixture of tetrahydrofuran and 2 wt% of an amine compound
- Flow rate: 1 ml/min
- Specimen concentration: 1-2 mg/ml (diluted in THF)
- Injection amount: 100 μl
- Column temperature: 40°C
- Detector: Refractive index
- Standard: Polystyrene (calibrated by cubic function).

3) Interaction parameter ($\chi_{eff}N$)

After analyzing the microstructure of each modified conjugated diene-based copolymer, an interaction parameter was calculated through the following Mathematical Formula 1:

[Mathematical Formula 1]

$$X_{eff}N = [(x_1 - x_2)(y_2 - y_1)(X_{VS} - X_{BS}) + (y_1 - y_2)^2 X_{VB}] \times N$$

in Mathematical Formula 1,

N is a polymerization degree of the modified conjugated diene-based copolymer,
$X_1$ is a styrene bond volume ratio in the first polymer
$X_2$ is a styrene bond volume ratio in the second copolymer
$y_1$ is a 1,2-vinyl bond volume ratio in butadiene in the first polymer,
$y_2$ is a 1,2-vinyl bond volume ratio in butadiene in the second copolymer,
$X_{VS}$ is 0.0565 + 5.62 $T^{-1}$, $X_{BS}$ is 0.00843 + 10.2 $T^{-1}$, and $X_{VB}$ is 0.00269 + 1.87 $T^{-1}$, and here, T is room temperature, and the unit thereof is an absolute temperature unit (K).

The 1,2-vinyl bond volume ratio and styrene bond volume ratio in each copolymer are values obtained by measuring and analyzing using Varian VNMR 500 MHz NMR, and when measuring in particular, 1,1,2,2-tetrachloroethane was used as a solvent, 5.97 ppm was calculated as a solvent peak, and the styrene bond and 1,2-vinyl bond volume ratios were calculated considering the peaks of 7.2-6.9 ppm as random styrene, 6.9-6.2 ppm as block styrene, 5.8-5.1 ppm as 1,4-vinyl bond, and 5.1-4.5 ppm as 1,2-vinyl bond. Each of the specimens was prepared by dissolving 10 mg of a polymer in 1 ml of 1,1,2,2-tetrachloroethane.

In addition, the polymerization degree of each copolymer was calculated from the number of bonding molecules in the number average molecular weight through the ratio of the repeating units derived from styrene and 1,3-butadiene in the copolymer based on the number average molecular weight (Mn) measured by the GPC analysis.

4) The second copolymer unit content

Each of the second copolymer unit contents in the copolymers of Examples 1 to 3 and Comparative Examples 2 to 4 was calculated through Mathematical Formula 4 below.

Meanwhile, the second copolymer unit represents a polymer chain unit formed after additionally injecting a monomer.

The second copolymer unit content (wt%) = $[(M_1 \times C_1) - (M_0 \times\times C_0)/(M_1 \times C_1)] \times 100$ [Mathematical Formula 4]

In Mathematical Formula 4, $M_1$ is a total monomer weight included in a first monomer solution and a second monomer solution, $C_1$ is a final polymerization conversion ratio before injecting a modifier, $M_0$ is a monomer weight included in a first monomer solution, and $C_0$ is a polymerization conversion ratio immediately before injecting a second monomer solution. Here, each monomer solution represents the monomer solution used for preparing the copolymers of the Examples and Comparative Examples.

5) Contraction factor

An absolute molecular weight was obtained from a light scattering detector and an RI detector using a GPC-light scattering measurement apparatus (GPCmax VE-2001, Malvern Co.) in which a light scattering detector, an RI detector and a viscosity detector were connected in order, wherein three columns using a polystyrene-based gel as a filler were connected (TDA305, Malvern Co.), an intrinsic viscosity [η] on the absolute molecular weight was obtained from the RI detector and the viscosity detector, an intrinsic viscosity of a linear polymer $[\eta]_0$ on the absolute molecular weight was computed through Mathematical Equation 2 below, an average value of the ratio of the intrinsic viscosity ($[\eta]/[\eta]_0$) corresponding to each absolute molecular weight was shown as the contraction factor. In this case, a mixture solution of tetrahydrofuran and triethylamine (THF in TEA: prepared by mixing 5 mmol of triethylamine with 1 L of tetrahydrofuran) was used as an eluent, TSKgel G4000HXL (TOSOH Co.), TSKgel G5000HXL (TOSOH Co.) and TSKgel G6000HXL TOSOH Co.) were used in combination as the columns, a specimen was prepared by dissolving 20 mg of a polymer in 10 mL of THF, 100 μl of a measurement solution was injected into a GPC measurement apparatus, and measurement was conducted at an oven temperature of 40°C under conditions of a THF flow rate of 1.0 mL/min.

[Mathematical Equation 2]

$$[\eta]_0=10^{-3.883}M^{0.771}$$

In Mathematical Equation 2, M is an absolute molecular weight.

[Table 1]

| Division | Interaction parameter | GPC | | | Glass transition temperature (°C) | | DSC differential curve peak number | Second copolymer unit content | Contraction factor |
|---|---|---|---|---|---|---|---|---|---|
| | | Molecular weight distribution curve | Mw ($\times 10^3$ g/mol) | MWD | Tg1 | Tg2 | | | |
| Example 1 | 21 | Unimodal | 560 | 1.53 | -86 | -11 | 2 | 28 | 0.95 |
| Example 2 | 25 | Unimodal | 490 | 1.54 | -89 | -12 | 2 | 27 | 0.96 |
| Example 3 | 28 | Unimodal | 470 | 1.52 | -89 | -9 | 2 | 28 | 0.94 |
| Comparative Example 1 | - | Unimodal | 511 | 1.56 | -72 | | 1 | - | 0.92 |
| Comparative Example 2 | 7 | Unimodal | 580 | 1.54 | -86 | -30 | 2 | 29 | 0.90 |
| Comparative Example 3 | 7 | Unimodal | 560 | 1.56 | -86 | -35 | 2 | 30 | 0.91 |

In Table 1 above, two glass transition temperature peaks of Tg1 and Tg2 were detected for Examples 1 to 3 and Comparative Examples 2 and 3, but one glass transition temperature peak was detected for Comparative Example 1, wherein Tg1 represents the glass transition temperature of the first polymer unit, and Tg2 represents the glass transition temperature of the second copolymer unit.

As shown in Table 1 above, the modified conjugated diene-based copolymers of Example 1 to Example 3 satisfied the conditions (i) to (vi) suggested in the present disclosure at the same time.

On the contrary, the modified conjugated diene-based polymers of Comparative Example 1 to Comparative Example 3 were unsatisfied with the interaction parameter, or were unsatisfied with the interaction parameter and the peak number of the differential curve at the same time.

**Experimental Example 2**

In order to comparatively analyze the physical properties of rubber compositions including each of the modified conjugated diene-based copolymers prepared in the Examples and Comparative Examples, and molded articles manufactured therefrom, tensile properties, viscoelasticity properties and processability properties were measured, respectively, and the results are shown in Table 3 below.

1) Preparation of rubber specimen

Blending was performed using each of the modified conjugated diene-based copolymers of the Examples and Comparative Examples as a raw material rubber under the blending conditions shown in Table 2 below. The raw materials in Table 2 are represented by parts by weight based on 100 parts by weight of the raw material rubber.

[Table 2]

| Division | Raw material | Amount (parts by weight) |
|---|---|---|
| First stage mixing | Rubber | 100 |
| | Silica | 70 |
| | Coupling agent (X50S) | 11.2 |
| | Process oil | 37.5 |
| | Zinc white | 3 |

(continued)

| Division | Raw material | Amount (parts by weight) |
|---|---|---|
| | Stearic acid | 2 |
| | Antioxidant | 2 |
| | Antiaging agent | 2 |
| | wax | 1 |
| Second stage mixing | Sulfur | 1.5 |
| | Rubber accelerator | 1.75 |
| | Vulcanization accelerator | 2 |

Particularly, the rubber specimen was mixed via a first stage mixing and a second stage mulling. In the first stage mulling, a raw material rubber, silica (filler), an organic silane coupling agent (X50S, Evonik), a process oil (TADE oil), zinc oxide (ZnO), stearic acid, an antioxidant (TMQ (RD)) (2,2,4-trimethyl-1,2-dihydroquinoline polymer), an antiaging agent (6PPD ((dimethylbutyl)-N-phenyl-phenylenediamine) and wax (Microcrystaline Wax) were mixed using a banbury mixer equipped with a temperature controlling apparatus. In this case, the initial temperature of a mixing apparatus was controlled to 70°C, and after finishing mixing, a first compound mixture was obtained at a discharge temperature of 145°C. In the second stage mixing, the first compound mixture was cooled to room temperature, and the first compound mixture, sulfur, a rubber accelerator (DPG (diphenylguanidine)), and a vulcanization accelerator (CZ (N-cyclohexyl-2-benzothiazylsulfenamide)) were added to the mixing apparatus and mixed at a temperature of 100°C to obtain a second compound mixture. Then, via a curing process at 160°C for 20 minutes, a rubber specimen was formed.

2) Tensile properties

The tensile properties were measured by manufacturing each specimen and measuring tensile strength when broken and tensile stress when stretched by 300% (300% modulus) of each specimen according to an ASTM 412 tensile test method. Particularly, tensile properties were measured using a Universal Test Machine 4204 tensile tester (Instron Co.) in a rate of 50 cm/min at room temperature.

3) Viscoelasticity properties

The viscoelasticity properties were verified by measuring viscoelasticity behavior on thermodynamic deformation at each measurement temperature (-95°C-70°C) with a frequency of 10 Hz by using a dynamic mechanical analyzer (GABO Co.) in a film tension mode and confirming a tan δ value. In this case, if the tan δ value at a low temperature of 0°C increases, wet skid resistance becomes better, and if the tan δ value at a high temperature of 60°C decreases, hysteresis loss decreases, and rolling resistance (fuel consumption ratio) becomes better. The resultant values in Table 3 were indexed based on the resultant value of Comparative Example 1, and thus, the higher numerical value means better results.

In addition, an E' (dynamic modulus) value at room temperature (25°C) was confirmed and if E' (dynamic modulus) value increases, steering properties becomes better.

[Table 3]

| Division | Tensile properties (Index, %) | | Viscoelasticity properties (Index, %) | | |
|---|---|---|---|---|---|
| | Tensile strength | 300% modulus | tan δ (at 0°C) | tan δ (at 60°C) | E' (at 25°C) |
| Example 1 | 102 | 107 | 129 | 104 | 122 |
| Example 2 | 101 | 105 | 125 | 105 | 121 |
| Example 3 | 100 | 109 | 121 | 103 | 123 |
| Comparative Example 1 | 100 | 100 | 100 | 100 | 100 |
| Comparative Example 2 | 98 | 101 | 102 | 99 | 106 |
| Comparative Example 3 | 100 | 100 | 105 | 101 | 104 |

As shown in Table 3, the tensile properties, tan δ at 0°C and E' at 25°C of Examples 1 to 3 and Comparative Examples 2 and 3 were calculated by Mathematical Formula 5 based on the measured value of Comparative Example 1, and tan δ at 60°C of Examples 1 to 3 and Comparative Examples 2 and 3 was calculated by Mathematical Formula 6 based on the measured value of Comparative Example 1:

[Mathematical Formula 5]

$$\text{Index (\%)} = (\text{measured value}/\text{reference value}) \times 100$$

[Mathematical Formula 6]

$$\text{Index (\%)} = (\text{reference value}/\text{measured value}) \times 100$$

As shown in Table 3 above, Examples 1 to 3 according to embodiments of the present invention all showed excellent tensile properties, wet skid resistance and rolling resistance in balance when compared to Comparative Examples 1 to 3.

In this case, Examples 1 to 3 all satisfied conditions (i) to (vi) suggested in the present invention, and Comparative Examples 1 to 3 did not satisfy any one or more among the conditions.

The results mean that the modified conjugated diene-based copolymer of the present invention includes a first polymer unit and a second copolymer unit, and a functional group derived from a modifier, and satisfies specific conditions defined by (i) to (vi) at the same time, and may achieve improving effects of tensile properties, wet skid resistance and rotation resistance in balance.

## Claims

**1.** A modified conjugated diene-based copolymer comprising:

a first polymer unit, a second copolymer unit and a functional group derived from a modifier,
wherein the first polymer unit comprises a repeating unit derived from a conjugated diene-based monomer, the second copolymer unit comprises a repeating unit derived from a conjugated diene-based monomer and a repeating unit derived from an aromatic vinyl-based monomer, and
the following conditions (i) to (vi) are satisfied:

(i) peaks of a differential curve of a differential scanning calorimetry curve measured by elevating a temperature from -100°C to 100°C at a rate of 10°C/min under a circulation of 50 ml/min of nitrogen, using differential scanning calorimetry based on ISO 22768:2006, are two;
(ii) a glass transition temperature of the first polymer unit is lower than a glass transition temperature of the second copolymer unit;
(iii) the glass transition temperature of the first polymer unit is from -100°C to -40°C;
(iv) the glass transition temperature of the second copolymer unit is from greater than -40°C to 10°C;
(v) the content of the second copolymer unit is from 5 wt% to 40 wt%; and
(vi) an interaction parameter ($\chi_{eff}N$) defined by the following Mathematical Formula 1 at room temperature is 15 or more:

[Mathematical Formula 1]

$$X_{eff}N = [(x_1 - x_2)(y_2 - y_1)(X_{VS} - X_{BS}) + (y_1 - y_2)^2 X_{VB}] \times N$$

in Mathematical Formula 1,

N is a polymerization degree of the modified conjugated diene-based copolymer,
$X_1$ is a styrene bond volume ratio in the first polymer
$X_2$ is a styrene bond volume ratio in the second copolymer
$y_1$ is a 1,2-vinyl bond volume ratio in butadiene in the first polymer,

$y_2$ is a 1,2-vinyl bond volume ratio in butadiene in the second copolymer,
$X_{VS}$ is 0.0565 + 5.62 $T^{-1}$, $X_{BS}$ is 0.00843 + 10.2 $T^{-1}$, and $X_{VB}$ is 0.00269 + 1.87 $T^{-1}$, where T is room temperature and has a unit of an absolute temperature unit (K).

**2.** The modified conjugated diene-based copolymer according to claim 1, wherein the interaction parameter ($\chi_{eff}N$) defined by the Mathematical Formula 1 at room temperature is 18 or more.

**3.** The modified conjugated diene-based copolymer according to claim 1, wherein the first polymer unit further comprises a repeating unit derived from an aromatic vinyl-based monomer.

**4.** The modified conjugated diene-based copolymer according to claim 1, wherein the glass transition temperature of the second copolymer unit is higher than the glass transition temperature of the first polymer by 40°C to 120°C.

**5.** The modified conjugated diene-based copolymer according to claim 1, wherein a molecular weight distribution curve by gel permeation chromatography is unimodal, and molecular weight distribution is from 1.0 to less than 1.7.

**6.** The modified conjugated diene-based copolymer according to claim 1, wherein a contraction factor (g') obtained by measurement by a gel permeation chromatography-light scattering method equipped with a viscosity detector is 0.7 or more.

**7.** The modified conjugated diene-based copolymer according to claim 1, wherein the functional group derived from a modifier is combined with one terminal of the second copolymer unit.

**8.** The modified conjugated diene-based copolymer according to claim 1, wherein Si and N contents are 50 ppm or more, respectively, based on a total weight of the copolymer.

**9.** The modified conjugated diene-based copolymer according to claim 1, wherein the modifier is an alkoxysilane-based compound.

## INTERNATIONAL SEARCH REPORT

International application No.
**PCT/KR2023/016548**

**A. CLASSIFICATION OF SUBJECT MATTER**

**C08F 236/10**(2006.01)i; **C08F 8/42**(2006.01)i

According to International Patent Classification (IPC) or to both national classification and IPC

**B. FIELDS SEARCHED**

Minimum documentation searched (classification system followed by classification symbols)

C08F 236/10(2006.01); B60C 1/00(2006.01); C08L 15/00(2006.01); C08L 53/02(2006.01); C08L 9/00(2006.01); C08L 9/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공액디엔계 단량체(conjugated diene monomer), 부타디엔(butadiene), 방향족 비닐계 단량체(aromatic vinyl monomer), 스티렌(styrene), 공중합체(copolymer), 변성(modified), 알콕시실란(alkoxy silane), 유리전이온도(glass transition temperature, Tg)

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0098080 A (JSR CORPORATION) 07 August 2014 (2014-08-07)<br>See paragraphs [0008], [0034], [0036], [0044]-[0053], [0070] and [0127]-[0136]; example 1; and table 1. | 1-9 |
| A | JP 2016-128544 A (YOKOHAMA RUBBER CO., LTD.) 14 July 2016 (2016-07-14)<br>See paragraphs [0073]-[0075]; claims 1 and 2; and table 1. | 1-9 |
| A | US 11124634 B2 (COMPAGNIE GENERALE DES ETABLISSEMENTS MICHELIN) 21 September 2021 (2021-09-21)<br>See entire document. | 1-9 |
| A | US 2020-0071506 A1 (THE GOODYEAR TIRE & RUBBER COMPANY) 05 March 2020 (2020-03-05)<br>See entire document. | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/016548**

**C. DOCUMENTS CONSIDERED TO BE RELEVANT**

| Category* | Citation of document, with indication, where appropriate, of the relevant passages | Relevant to claim No. |
|---|---|---|
| A | US 6518350 B1 (KOBAYASHI, Naokazu et al.) 11 February 2003 (2003-02-11) See entire document. | 1-9 |
| A | KR 10-2443664 B1 (HANKOOK TIRE & TECHNOLOGY CO., LTD.) 14 September 2022 (2022-09-14) See entire document. | 1-9 |

Form PCT/ISA/210 (second sheet) (July 2022)

**INTERNATIONAL SEARCH REPORT**
**Information on patent family members**

International application No.
**PCT/KR2023/016548**

| Patent document cited in search report | | | Publication date (day/month/year) | Patent family member(s) | | | Publication date (day/month/year) |
|---|---|---|---|---|---|---|---|
| KR | 10-2014-0098080 | A | 07 August 2014 | CN | 103958600 | A | 30 July 2014 |
| | | | | CN | 103958600 | B | 24 August 2016 |
| | | | | EP | 2787037 | A1 | 08 October 2014 |
| | | | | EP | 2787037 | B1 | 24 May 2017 |
| | | | | JP | 5920359 | B2 | 18 May 2016 |
| | | | | SG | 11201402767 | A | 26 September 2014 |
| | | | | US | 2014-0357759 | A1 | 04 December 2014 |
| | | | | US | 9475923 | B2 | 25 October 2016 |
| | | | | WO | 2013-081053 | A1 | 06 June 2013 |
| JP | 2016-128544 | A | 14 July 2016 | JP | 6485048 | B2 | 20 March 2019 |
| US | 11124634 | B2 | 21 September 2021 | CN | 110099804 | A | 06 August 2019 |
| | | | | CN | 110099804 | B | 10 August 2021 |
| | | | | EP | 3558704 | A1 | 30 October 2019 |
| | | | | EP | 3558704 | B1 | 24 February 2021 |
| | | | | JP | 2020-502358 | A | 23 January 2020 |
| | | | | PL | 3558704 | T3 | 06 September 2021 |
| | | | | US | 2020-0123351 | A1 | 23 April 2020 |
| | | | | WO | 2018-115722 | A1 | 28 June 2018 |
| US | 2020-0071506 | A1 | 05 March 2020 | CN | 110872408 | A | 10 March 2020 |
| | | | | CN | 110872408 | B | 11 March 2022 |
| | | | | EP | 3620307 | A1 | 11 March 2020 |
| | | | | EP | 3620307 | B1 | 07 December 2022 |
| | | | | JP | 2020-045482 | A | 26 March 2020 |
| | | | | US | 10767034 | B2 | 08 September 2020 |
| US | 6518350 | B1 | 11 February 2003 | DE | 60018649 | T2 | 04 May 2006 |
| | | | | EP | 1072442 | A1 | 31 January 2001 |
| | | | | EP | 1072442 | B1 | 16 March 2005 |
| | | | | ES | 2238227 | T3 | 01 September 2005 |
| | | | | JP | 2001-106830 | A | 17 April 2001 |
| | | | | JP | 4517470 | B2 | 04 August 2010 |
| KR | 10-2443664 | B1 | 14 September 2022 | KR | 10-2022-0119201 | A | 29 August 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220137475
- US 4397994 A
- JP 8193147 A


### Non-patent literature cited in the description


- *Marcromolecules*, 1991, vol. 24, 4844-4851
- *RSC Advances*, 2016 (6), 50460-50470